# EUROPÄISCHE PATENTANMELDUNG

(11) **EP 3 643 365 A1**
(43) Veröffentlichungstag der Anmeldung: **29.04.2020**
(21) Anmeldenummer: 18202277.2
(22) Anmeldetag: 24.10.2018
(51) Int. Cl.: A62C 2/06, E04B 1/94, E06B 5/16, F16L 5/04

(54) **BRANDSCHUTZELEMENT ZUM ABDICHTEN VON DURCHGANGSÖFFNUNGEN IN BAUELEMENTEN**

(71) Anmelder: Hilti Aktiengesellschaft, 9494 Schaan (LI)
(72) Erfinder: Ahlers, Andreas, 87679 Westendorf (DE); Simon, Sebastian, 86807 Buchloe Lindenberg (DE); Prem, Ramona, 86836 Untermeitingen (DE); Willner, Ralf, 86874 Tussenhausen (DE); Freudling, Sarah, 86157 Augsburg (DE)
(74) Vertreter: Hilti Aktiengesellschaft Corporate Intellectual Property

(57) **Zusammenfassung**

Die vorliegende Erfindung betrifft ein Brandschutzelement mit einem Schichtkörper zur Abdichtung von Durchgangsöffnungen in Bauelementen, wie beispielsweise Gebäudebauteilen, durch die Leitungen hindurchgeführt sind. Ferner betrifft die vorliegende Erfindung ein Verfahren zur Herstellung des erfindungsgemäßen Brandschutzelements sowie die Verwendung des Brandschutzelementes zur Abdichtung von Durchgangsöffnungen und/oder Fugen in Bauelementen gegen Feuer und Rauchgase.

## Beschreibung

Die vorliegende Erfindung betrifft ein Brandschutzelement mit einem Schichtkörper zur Abdichtung von Durchgangsöffnungen in Bauelementen, wie beispielsweise Gebäudebauteilen, durch die Leitungen hindurchgeführt sind. Ferner betrifft die vorliegende Erfindung ein Verfahren zur Herstellung des erfindungsgemäßen Brandschutzelements sowie die Verwendung des Brandschutzelementes zur Abdichtung von Durchgangsöffnungen und/oder Fugen in Bauelementen gegen Feuer und Rauchgase.

Beim Verlegen von Leitungen, wie z.B. Rohrleitungen, elektrische Leitungen und dergleichen, werden diese durch Durchgangsöffnungen in Bauelementen, insbesondere Gebäudebauteilen, wie Wände und Decken, geführt. Um den Durchtritt von Feuer und Rauchgasen im Brandfall zu verhindern, werden zwischen den Innenwänden der Durchgangsöffnungen und den hindurchgeführten Leitungen sowie in Fugen Brandschutzelemente eingebracht. Diese Brandschutzelemente werden in der Regel mit intumeszierenden Materialien versehen oder aus diesen gebildet, so dass sich das Material bei Einwirkung von Wärme, wie sie im Brandfall auftritt, ausdehnt und dadurch die Leitung abdrückt und die Durchgangsöffnung in dem Bauelement verschließt.

In der Regel weisen die Brandschutzelemente ein Trägermaterial auf, dem für die Zwecke des Brandschutzes Additive zugesetzt werden, die bei erhöhter Temperatur, wie etwa im Brandfall, expandieren bzw. intumeszieren und in Zusammenspiel mit dem Trägermaterial und ggf. weiteren Additiven eine isolierende Schicht bilden und somit die ggf. entstehende Öffnung verschließen. In den bekannten Brandschutzelementen wird häufig ein physikalisch wirkendes Treibmittel eingesetzt. Dieses ist üblicherweise zufällig auf einer oder mehreren Flächen der Oberfläche des Trägermaterials und/oder innerhalb des Trägermaterials verteilt. Häufig weisen die physikalisch wirkenden Treibmittel eine strukturelle Anisotropie auf, was bedeutet, dass sie beispielsweise in Form von Plättchen oder Fasern vorliegen können. In bekannten Brandschutzelementen wird diese strukturelle Anisotropie nicht berücksichtigt, so dass das physikalisch wirkende Treibmittel auf einer oder mehreren Flächen der Oberfläche und/oder innerhalb des Trägermaterials zufällig orientiert bzw. ausgerichtet vorliegt. Das physikalisch wirkende Treibmittel zeigt somit keine Vorzugsorientierung. Man spricht in diesem Fall auch von einer isotropen oder statistischen Ausrichtung bzw. Orientierung des physikalisch wirkenden Treibmittels auf einer oder mehreren Flächen der Oberfläche des Trägermaterials und/oder innerhalb des Trägermaterials.

Durch die zufällige Orientierung des physikalisch wirkenden Treibmittels auf einer oder mehreren Flächen der Oberfläche bzw. innerhalb des Trägermaterials, geschieht im Brandfall eine Expansion bzw. Intumeszenz des physikalisch wirkenden Treibmittels im Wesentlichen gleichmäßig in alle drei Raumrichtungen. Bei Brandschutzelementen, die beispielsweise zum Abdichten von Durchgangsöffnungen verwendet werden, wird jedoch eine verstärkte Expansion in Richtung der zu verschließenden Durchgangsöffnung benötigt. Die Expansion in alle drei Raumrichtungen führt bei bekannten Brandschutzelementen dazu, dass ein Großteil des expandierten Materials seitlich aus der Durchgangsöffnung herausgedrückt wird und somit nur ein geringer Druck in Richtung der Durchgangsöffnung ausgeübt wird. Zudem ist das aus der Durchgangsöffnung herausgedrückte Material ungeschützt und daher mechanischen Belastungen ausgesetzt, wie beispielsweise einem Löschwasserstrahl, Luftströmungen, hervorgerufen durch einen Brand oder dergleichen, so dass der herausgedrückte Anteil des expandierten Materials im Brandfall nicht beständig ist. Weiterhin ist durch das seitliche Herausdrücken des Materials aus der Durchgangsöffnung die Geschwindigkeit des Zusammendrückens der durchgeführten Leitung reduziert, so dass im Brandfall eine kurze Verschlusszeit nicht gewährleistet ist.

Betrachtet man nun die Expansion des physikalisch wirkenden Treibmittels auf mikroskopischer Ebene in eine Raumrichtung, so expandiert dieses jeweils "nach oben" und "nach unten". Bereits in der vereinfachten Betrachtung der Expansion in eine Raumrichtung zeigt sich, dass es aufgrund entgegengesetzt wirkender Kräfte ("nach oben" und "nach unten") zu einer gegenseitigen Behinderung des physikalisch wirkenden Treibmittels bei der Expansion kommt. Dieser Effekt kommt umso stärker zum Tragen je größer die strukturelle Anisotropie des physikalisch wirkenden Treibmittels ausgeprägt ist, wie beispielsweise bei schichtförmig aufgebauten, physikalisch wirkenden Treibmitteln. Es kommt zu einem Phänomen, der *"negativen Intumeszenz",* welches den Verlust an theoretisch vorhandenem Expansions- bzw. Intumeszenzpotential beschreibt, hervorgerufen durch die gegenseitige Behinderung des physikalisch wirkenden Treibmittels bei der Expansion.

Die zuvor beschriebenen Probleme sorgen dafür, dass das vorhandene Expansions- bzw. Intumeszenzpotential des physikalisch wirkenden Treibmittels lediglich unvollständig genutzt werden kann.

In bestehenden Brandschutzelementen wird versucht das Problem des Herausdrückens des expandierten Materials durch eine entsprechende Formgebung des Gehäuses des Brandschutzelements oder den Einsatz von Gewebe, welches das expandierte Material umschließt, zu verhindern.

So beschreibt die EP 3 260 678 A1 ein streifenförmiges Brandschutzelement, in dem eine Innenlage aus intumeszierenden Material zumindest über einen Teil ihrer Breite mit einer Verstärkungsmaterial versehen ist, so dass durch das Umbiegen im Bereich der Verstärkungseinlage eine Umklappkante ausgebildet wird, die die Verstärkungseinlage außenseitig umgibt.

Die DE 2004 055 928 B4 beschreibt eine Brandschutzmanschette, bei der eine Transporteinrichtung vorgesehen ist, die unter Wärmeeinwirkung expandierendes Material im Brandfall von einer Stützeinrichtung in die Richtung auf das Innere der Durchführung verlagert.

In einem anderen Ansatz wird die Geometrie der Brandschutzelemente so gestaltet, dass ein besserer Wärmeeintrag zustande kommt, wodurch eine frühere Expansion des intumeszierenden Materials stattfindet. Entsprechende Brandschutzelemente sind beispielsweise in der EP 1 273 841 A1, DE 10 2008 031 018 A1 und DE 20 2012 003 405 U1 beschrieben.

Im Stand der Technik sind derzeit keine Lösungen bekannt, mit denen die durch die sogenannte *"negative Intumeszenz"* auftretenden Probleme behoben werden können.

Mit den bekannten Brandschutzelementen kann das seitliche Herausdrücken des expandierten Materials zwar verringert werden, aber nicht unterbunden werden, so dass es weiterhin zu einem Verlust an Material kommt, welches nicht für den Verschluss der Durchgangsöffnung zur Verfügung steht. Zusätzlich führt das seitliche Herausdrücken des expandierten Materials zu einer Querverdichtung des expandierten Materials, wodurch die Expansion des physikalisch wirkenden Treibmittels zur Durchgangsmitte zum Verschluss des Durchgangs behindert wird. Ferner entsteht bei diesen Brandschutzelementen eine Verdichtung der physikalisch wirkenden Treibmittel durch Kompression an den Wandungen bzw. an den Gewebeflächen des Brandschutzelements. Diese komprimierten Bereiche haben ein vermindertes Expansionspotential, welches im Brandfall nicht mehr für den Durchgangsverschluss zur Verfügung steht. Ferner sorgt die Verdichtung zu einer Zunahme der Wärmeleitfähigkeit, wodurch ein schnellerer Temperaturanstieg an der brandabgewandten Seite stattfindet, mit dem ein erhöhtes Risiko für einen Feuerübertritt einhergeht.

Die zuvor beschriebenen Nachteile kommen insbesondere bei Brandschutzelementen für größere Öffnungsquerschnitte zum Tragen. Bei diesen Brandschutzelementen werden große Mengen an physikalisch wirkenden Treibmitteln eingesetzt, um einen zuverlässigen Verschluss der Durchgangsöffnung im Brandfall zu gewährleisten. Die zuvor beschriebenen Probleme sind daher hier im verstärktem Maße zu beobachten. Zusätzlich weisen diese Brandschutzelemente teilweise ein hohes Gewicht auf, wodurch deren Installation erschwert wird. Zusätzlich ist die Verwendung von großen Mengen an physikalisch wirkenden Treibmitteln sowohl unter ökologischen als auch wirtschaftlichen Gesichtspunkten von Nachteil.

Es besteht daher ein Bedarf an Brandschutzelementen, mit dem ein Zwischenraum zwischen einer Innenfläche einer Durchgangsöffnung und einer hindurchgeführten Leitung im Brandfall zuverlässig abgedichtet werden kann. Es soll erreicht werden, dass bei der Expansion des physikalisch wirkenden Treibmittels dieses sowohl in verringertem Maß aus dem Zwischenraum herausgedrückt wird als auch dass eine Verdichtung des physikalisch wirkenden Treibmittels bei der Expansion in vermindertem Maße auftritt bzw. weitestgehend verhindert wird und folglich die hindurchgeführte Leitung in verstärktem Maße abdrückt wird.

Ferner ist es Aufgabe der vorliegenden Erfindung ein Brandschutzelement zur Verfügung zu stellen, welches eine Verringerung des Materialeinsatzes, insbesondere der Menge an physikalisch wirkenden Treibmittel, ermöglicht, ohne die Performance des Brandschutzelementes, insbesondere in Hinblick auf dessen Verschlussfähigkeit, im Brandfall zu beeinträchtigen. Es ist insbesondere Aufgabe der vorliegenden Erfindung ein Brandschutzelement zur Verfügung zu stellen, mit der eine Verringerung der Menge des physikalisch wirkenden Treibmittels im Brandschutzelement ermöglicht wird und mit der gleichzeitig eine verbesserte Performance des Brandschutzelementes, insbesondere in Hinblick auf dessen Verschlussfähigkeit, im Brandfall erreicht werden kann.

Die Aufgabe wird durch ein Brandschutzelement nach Anspruch 1 gelöst sowie durch ein Verfahren nach dem nebengeordneten Anspruch 14.

Weitere Ausgestaltungen sind in den abhängigen Ansprüchen angegeben.

Gemäß einem ersten Aspekt der vorliegenden Erfindung ist ein Brandschutzelement (10) vorgesehen umfassend mindestens eine Brandschutzschicht (2) und mindestens eine Funktionsschicht (3), wobei
i) die Brandschutzschicht (2) ein Trägermaterial (4) und mindestens ein schichtartig aufgebautes, physikalisch wirkendes Treibmittel (5) umfasst und
ii) die Funktionsschicht (3) eine Temperaturbeständigkeit bis mindestens 300 °C aufweist,
dadurch gekennzeichnet, dass die Brandschutzschicht (2) und die Funktionsschicht (3) im Wesentlichen stoffschlüssig miteinander verbunden sind sowie, dass zueinander benachbarte Teilchen des schichtartig aufgebauten, physikalisch wirkenden Treibmittels im Wesentlichen parallel zueinander angeordnet sind und die Funktionsschicht (3) mindestens ein semi-rigides Material umfasst.

Eine Idee des obigen Brandschutzelementes besteht in der Bereitstellung eines mindestens zweischichtigen Schichtkörpers mit mindestens einer Brandschutzschicht und mindestens einer Funktionsschicht. In der Brandschutzschicht wird ein strukturell anisotrop aufgebautes, physikalisch intumeszierendes Material (schichtartig aufgebautes, physikalisch wirkendes Treibmittel) mit einem Trägermaterial kombiniert und die strukturelle Anisotropie des physikalisch intumeszierendes Material mittels Ausrichtung bzw. Orientierung der Teilchen genutzt, um damit Einfluss auf die Richtung der Expansion im Brandfall zu nehmen und diese somit gezielt steuern zu können. Der Einsatz eines semi-rigiden Materials als Funktionsschicht ermöglicht es einer Verdichtung des schichtartig aufgebauten, physikalisch wirkenden Treibmittels im Verlauf der Expansion entgegenzuwirken, indem der von der Brandschutzschicht ausgehenden Blähdruck auf die Funktionsschicht übertragen wird.

Zum besseren Verständnis der Erfindung werden die folgenden Erläuterungen der hierin verwendeten Terminologie als sinnvoll erachtet. Im Sinne der Erfindung:
- beschreibt der Begriff *"Trägermaterial"* eine Zusammensetzung umfassend ein oder mehrere Polymere. Das Trägermaterial zeichnet sich dadurch aus, dass das oder die Polymere eine kontinuierliche Phase bilden;
- beschreibt der Begriff *"stoffschlüssig",* einen durch molekulare Kräfte entstehenden Schluss zwischen zwei Schichten, der diese so zusammenhält, dass sie in ihrer Gesamtheit einen festen Körper ergeben. Eine stoffschlüssige Verbindung kann beispielsweise durch Schweißen, Löten oder Kleben hergestellt werden. Das Lösen einer stoffschlüssigen Verbindung ist vielfach nur unter Zerstörung der Elemente möglich, die über eine stoffschlüssige Verbindung miteinander verbunden waren.
- bedeutet *"physikalische Intumeszenz"* die Bildung einer voluminösen, isolierenden Schicht durch Aufblähen einer Verbindung, die, ohne dass eine chemische Reaktion zwischen zwei Verbindungen stattgefunden hat, bei Hitzeeinwirkung Gase freisetzt, wodurch das Volumen der Verbindung um ein Vielfaches des ursprünglichen Volumens zunimmt. Im Rahmen der vorliegenden Erfindung ist unter dem Begriff eines physikalisch wirkenden Treibmittels ein Material oder eine Komponente zu verstehen, die in der Lage ist, physikalische Intumeszenz beim Überschreiten einer bestimmten Temperatur, der sogenannten Aktivierungstemperatur, zu zeigen;

- bedeutet der Begriff *"thermische Expansion"* oder vereinfacht *"Expansion"* die durch physikalische und/oder chemische Intumeszenz hervorgerufene Volumenzunahme eines Materials oder einer Komponente;
- ist ein *"Polymer"* ein Molekül mit sechs oder mehr Wiederholungseinheiten, das eine Struktur aufweisen kann, die linear, verzweigt, sternförmig, gewunden, hyperverzweigt oder vernetzt sein kann; Polymere können eine einzelne Art von Wiederholungseinheiten aufweisen ("Homopolymere") oder sie können mehr als eine Art von Wiederholungseinheiten aufweisen ("Copolymere");
- bedeutet der Begriff *"Festkörpergehalt"* den Gehalt an nicht-flüchtigen Anteilen an einer Zusammensetzung. Die Bestimmung des Festkörpergehaltes wird nach DIN EN ISO 3251 (2008) durchgeführt;
- bedeutet *"enthalten"* und *"umfassen",* dass neben den genannten Bestandteilen noch weitere vorhanden sein können. Diese Begriffe sind einschließlich gemeint und umfassen daher auch den Begriff *"bestehen aus". "Bestehen aus"* ist abschließend gemeint und bedeutet, dass keine weiteren Bestandteile vorhanden sein können. In einer bevorzugten Ausführungsform bedeuten die Begriffe *"enthalten"* und *"umfassen"* den Begriff *"bestehen aus";*
- beschreibt ein durch Zahlen begrenzter Bereich, z.B. "5 bis 60 Gew.-%", dass die beiden Eckwerte und jeder Wert innerhalb dieses Bereichs einzeln offenbart sind;

Das Brandschutzelement im Sinne der vorliegenden Erfindung umfasst mindestens eine Brandschutzschicht und mindestens eine Funktionsschicht, wobei die Brandschutzschicht und die Funktionsschicht im Wesentlichen stoffschlüssig miteinander verbunden sind. Somit umfasst das Brandschutzelement der vorliegenden Erfindung einen Schichtkörper, der in seiner einfachsten Ausgestaltung einen zweischichtigen Aufbau aufweist. Es ist jedoch auch möglich, dass das Brandschutzelement weitere Brandschutzschichten und/oder Funktionsschichten aufweist. In diesem Fall ist es vorteilhaft, dass das Brandschutzelement einen Schichtkörper mit einem alternierenden Aufbau aus Brandschutzschichten und Funktionsschichten aufweist, d.h. dass der Schichtkörper aus einer Abfolge von gleichen und/oder unterschiedlichen Brandschutzschichten und gleichen und/oder unterschiedlichen Funktionsschichten aufgebaut ist, wobei vorteilhaft jeweils die zueinander benachbarten Brandschutzschichten und Funktionsschichten im Wesentlichen stoffschlüssig miteinander verbunden sind.

In einer bevorzugten Ausführungsform umfasst das Brandschutzelement einen Schichtkörper mit mindestens zwei Brandschutzschichten und mindestens eine zwischen den Brandschutzschichten angeordnete Funktionsschicht, wobei zur Bildung des Schichtkörpers die Brandschutzschichten und die zwischen den Brandschutzschichten angeordnete Funktionsschicht im Wesentlichen stoffschlüssig miteinander verbunden sind. Es kann jedoch auch notwendig sein, wie beispielsweise bei Brandschutzelementen für größere Öffnungsquerschnitte, dass das Brandschutzelement im Sinne der vorliegenden Erfindung einen höherschichtigen Aufbau aus mehreren Brandschutzschichten und mehreren Funktionsschichten benötigt. Hierbei ist es vorteilhaft, dass die Anzahl der Brandschutzschichten n beträgt und die Anzahl der Funktionsschichten n-1, wobei n eine ganze Zahl von 3 bis 11 ist.

Der Begriff "im *Wesentlichen stoffschlüssig"* im Sinne der vorliegenden Erfindung ist so zu verstehen, dass die Materialien zweier benachbarter Schichten (Brandschutzschicht und Funktionsschicht) zu einem großen Teil stoffschlüssig miteinander verbunden sind. In manchen Fällen kann die Funktionsschicht bedingt durch ihre Geometrie "Löcher" aufweisen. Der Begriff der *"im Wesentlichen stoffschlüssigen Verbindung"* ist in diesen Fällen auf das tatsächliche Material, aus der die Funktionsschicht gebildet ist, zu beziehen und die *"Löcher"* bleiben unberücksichtigt. Zusätzlich kann die Oberflächenbeschaffenheit der Funktionsschicht bestimmen, ob ein flächiger Stoffschluss, ein räumlicher Stoffschluss oder Mischungen davon zwischen der Brandschutzschicht und Funktionsschicht zustande kommt. Bei einem räumlichen Stoffschluss ist im Wesentlichen die gesamte Materialoberfläche der Funktionsschicht mit der Brandschutzschicht verbunden. In den Fällen, in denen die Funktionsschicht eine ausgeprägte dreidimensionale Struktur aufweist, kann es vorkommen, dass nicht die gesamte Materialoberfläche der Funktionsschicht mit der Brandschutzschicht stoffschlüssig verbunden ist, sondern lediglich das am höchst bzw. tiefst liegenden Material der Funktionsschicht. In diesem Fall spricht man von einem flächigen Stoffschluss. Um den Effekt der Erfindung erzielen zu können, ist ein im Wesentlichen flächiger Stoffschluss ausreichend, es ist jedoch bevorzugt, dass ein im Wesentlichen räumlicher Stoffschluss zwischen Brandschutzschicht und Funktionsschicht vorliegt.

Es kann beispielsweise aus produktionstechnischen Gründen vorkommen, dass bei kleineren Arealen zweier benachbarter Schichten keine flächige bzw. räumliche stoffschlüssige Verbindung zustande kommt und an diesen Stellen die Flächen der Schichten lediglich aufeinanderliegen. Entsprechende Schichtkörper gelten auch als erfindungsgemäß und sind geeignet im erfindungsgemäßen Brandschutzelement eingesetzt zu werden. Vorzugsweise sind innerhalb des Schichtkörpers mindestens 40 %, bevorzugter 60 %, noch bevorzugter 80 % der zueinander benachbarten Flächen der Brandschutzschicht und der Funktionsschicht flächig stoffschlüssig, insbesondere räumlich stoffschlüssig, miteinander verbunden. Es hat sich als besonders vorteilhaft herausgestellt, wenn innerhalb des Schichtkörpers mindestens 90 %, bevorzugter mindestens 95 % und besonders bevorzugt 98 % aller zueinander benachbarten Brandschutzschichten und Funktionsschichten flächig stoffschlüssig, insbesondere räumlich stoffschlüssig, miteinander verbunden sind.

Die mindestens eine Brandschutzschicht umfasst mindestens ein Trägermaterial und mindestens ein schichtartig aufgebautes, physikalisch wirkendes Treibmittel. Umfasst das erfindungsgemäße Brandschutzelement mehr als eine Brandschutzschicht, so kann das Trägermaterial der Brandschutzschichten gleich oder verschieben sein. In einer bevorzugten Ausführungsform umfassen die Brandschutzschichten das gleiche Trägermaterial.

Das Trägermaterial umfasst vorzugsweise eine Polymerdispersion auf Wasser- oder Lösungsmittelbasis, insbesondere eine wässrige Polymerdispersion. Beispiele wässriger Polymerdispersionen, die sich in besonderem Masse bewährt haben, sind wässrige Acrylatdispersionen, wässrige Dispersionen bzw. Emulsionen von Harnstoff-, Formaldehyd- oder Melaminharzen, Polyvinylacetaten, Polyvinylalkoholen, Acrylnitril, Styrolacrylaten und ihrer Copolymere.

Bevorzugt enthält das Trägermaterial eine wässrige Acrylat-(Copolymer)-Dispersion, besonders bevorzugt eine wässrige Dispersion eines Polyalkyl-(meth)acrylats und/oder eines Alkyl(meth)acrylat-Copolymers. Vorzugsweise handelt es sich dabei um wässrige Dispersionen, die man durch Polymerisation, namentlich durch Emulsionspolymerisation von Alkyl(meth)acrylaten und/oder durch Copolymerisation von Alkyl(meth)acrylaten mit sich und/oder mit copolymerisierbaren Comonomeren, wie vorzugsweise (Meth)acrylsäure, (Meth)acrylamid, Styrol, Itaconsäure, Acrylnitril und/ oder Citraconsäure erhält, wobei die Alkylgruppen der Alkyl(meth)acrylate bevorzugt 1 bis 6 C-Atome, bevorzugter 1 bis 4 C-Atome aufweisen. Erfindungsgemäß besonders bevorzugt sind wässrige Dispersionen von Polybutylacrylat, Polyethylhexylacrylat oder Alkyl(meth)acrylat-Styrol-Copolymeren. Die Acrylat-(Copolymer)-Dispersion kann sowohl Homopolymere als auch Copolymere oder auch Mischungen von Homopolymeren und/oder Copolymeren enthalten und wird so vorzugsweise mit einem pH-Wert im Bereich von 7 bis 9, vorzugsweise einen pH-Wert von 8, welcher erforderlichenfalls mit verdünnter Natronlauge oder Ammoniaklösung eingestellt wird, mit den anderen Bestandteilen vermischt. Diese wässrige Acrylat- (Copolymer)-Dispersion besitzt vorzugsweise einen Festkörpergehalt von 40 bis 90 Gew.-%, stärker bevorzugt von 50 bis 80 Gew.-%. Die erfindungsgemäß bevorzugt eingesetzten Acrylat-(Copolymer)- Dispersionen sind dem Fachmann bekannt und im Handel erhältlich. Die Härtung erfolgt physikalisch durch Trocknen.

Es ist weiterhin bevorzugt, dass das Trägermaterial einen Erweichungs- oder Zersetzungspunkt im Temperaturbereich von 80 °C bis 500 °C, bevorzugt von 90 °C bis 400 °C, weiter bevorzugt von 110 °C bis 300 °C hat. Durch eine geeignete Wahl der Erweichungs- oder Zersetzungstemperatur des Trägermaterials können die Expansionseigenschaften des erfindungsgemäßen Brandschutzelements beeinflusst werden. Tritt im Brandfall eine frühzeitige Erweichung bzw. Zersetzung des Trägermaterials ein, so führt dies gegebenenfalls zu einer Umorientierung des schichtartig aufgebauten, physikalisch wirkenden Treibmittels durch Verformen und/oder Schmelzen des Trägermaterials. Liegt die Erweichungs- oder Zersetzungstemperatur des Trägermaterials zu hoch, wird die Expansion des schichtartig aufgebauten, physikalisch wirkenden Treibmittels behindert. Ferner kann durch eine geeignete Wahl der Erweichungs- oder Zersetzungstemperatur des Trägermaterials der Brandschutzschichten die Interaktion zwischen der Funktionsschicht und des schichtartig aufgebauten, physikalisch wirkenden Treibmittels beeinflusst werden.

Erfindungsgemäß umfasst die Brandschutzschicht mindestens ein schichtartig aufgebautes, physikalisch wirkendes Treibmittel.

Umfasst das erfindungsgemäße Brandschutzelement mehr als eine Brandschutzschicht so kann das schichtartig aufgebaute, physikalisch wirkende Treibmittel der Brandschutzschichten gleich oder verschieden sein. In einer bevorzugten Ausführungsform umfassen die Brandschutzschichten das gleiche schichtartig aufgebaute, physikalisch wirkende Treibmittel.

Unter dem Begriff *"schichtartig aufgebaut"* wird im Sinne der vorliegenden Erfindung ein Material verstanden, welches strukturell anisotrop in Form von Schichten aufgebaut ist. Der schichtartige Aufbau kommt dadurch zustande, dass die Wechselwirkungen innerhalb einer Schicht wesentlich stärker ausgeprägt sind als zwischen den Schichten. Im Sinne der vorliegenden Erfindung bedeutet dies insbesondere, dass innerhalb der Schichten kovalente Bindungen vorliegen, wobei zwischen den Schichten nur schwache Wechselwirkung in Form elektrostatischer und/oder van-der-Waals-Kräfte wirken.

Das schichtartig aufgebaute, physikalisch wirkende Treibmittel umfasst eine Vielzahl von Teilchen. Es ist erfindungswesentlich, dass zueinander benachbarte Teilchen des schichtartig aufgebauten, physikalisch wirkenden Treibmittels im Wesentlichen parallel zueinander angeordnet sind. Vorzugsweise liegen die Teilchen des schichtartig aufgebauten, physikalisch wirkenden Treibmittels in Form von Plättchen vor.

Für die vorliegende Erfindung ist es erfindungswesentlich, dass zueinander benachbarte Teilchen des schichtartig aufgebauten, physikalisch wirkenden Treibmittels im Wesentlichen parallel zueinander angeordnet sind. Im Brandfall expandiert das schichtartig aufgebaute, physikalisch wirkende Treibmittel im Wesentlichen senkrecht zu seinen Schichten, aus denen es aufgebaut ist. Eine im Wesentlichen parallele Ausrichtung zueinander benachbarter Teilchen sorgt dafür, dass die Expansion im Wesentlichen in eine Raumrichtung erfolgt. Die im Wesentlichen parallele Ausrichtung der Teilchen ermöglicht somit eine räumliche Steuerung des Expansionsverhaltens im Brandfall. Beim Einsatz des erfindungsgemäßen Brandschutzelements ist es somit möglich, die Expansion verstärkt in Richtung der zu verschließenden Durchgangsöffnung zu lenken und somit ein seitliches Herausdrücken aus der Durchgangsöffnung zu verringern bzw. zu unterbinden. Das eingesetzte schichtartig aufgebaute, physikalisch wirkende Treibmittel steht zu einem großen Teil für den Verschluss der Durchgangsöffnung zur Verfügung, so dass die Verschlussfähigkeit insgesamt verbessert wird, womit auch eine deutliche Reduktion des Materialeinsatzes an physikalisch wirkenden Treibmittel einhergeht.

Der Begriff *"im Wesentlichen parallel"* im Sinne der vorliegenden Erfindung ist so zu verstehen, dass die Teilchen nicht den streng mathematischen Anforderungen von parallelen Ebenen genügen müssen, sondern auch eine leichte Verkippung der Ebenen erlaubt ist. Auch bei einer leichten Verkippung der Ebenen ist der oben beschriebene Effekt einer im Wesentlichen in eine Raumrichtung auftretenden Expansion weiterhin gewährleistet. Ferner umfasst der Begriff *"im Wesentlichen parallel"* im Sinne der vorliegenden Erfindung auch, dass ein geringer Anteil zueinander benachbarter Teilchen nicht parallel angeordnet sein muss, was beispielsweise produktionstechnisch bedingt sein kann. Vorzugsweise zeigen mindestens 75 %, bevorzugter mindestens 80 %, bevorzugter mindestens 85 %, bevorzugter mindestens 90 %, bevorzugter mindestens 95 % der zueinander benachbarten Teilchen des schichtartig aufgebauten, physikalisch wirkenden Treibmittels eine parallele Anordnung zueinander.

Die im Wesentlichen parallele Anordnung der Teilchen des schichtartig aufgebauten, physikalisch wirkenden Treibmittels kann durch visuelle Inspektion der Brandschutzschicht, gegebenenfalls mit Hilfe eines Mikroskops, durch einen Fachmann bestimmt werden.

Eine Quantifizierung einer eventuell vorhandenen Verkippung kann theoretisch dadurch beschrieben werden, dass ein Lot (90°) auf ein willkürlich gewähltes Teilchen des schichtartig aufgebauten, physikalisch wirkenden Treibmittels gefällt wird. Bei einer Verschiebung dieses Lots zu Teilchen, die diesem Teilchen benachbart sind, tritt vorzugsweise eine maximale Winkelabweichung zu 90° von 25°, bevorzugter von 15°, bevorzugter von 10°, bevorzugter von 5° und noch weiter bevorzugt von 2° auf.

Unter dem Ausdruck *"zueinander benachbarter Teilchen"* im Sinne der vorliegenden Erfindung sind solche Teilchen zu verstehen, die in allen drei Raumrichtungen in direkter Nachbarschaft zu einem bestimmten Teilchen liegen, d.h. die innerhalb einer ersten Sphäre um ein Teilchen angeordnet sind. Vorzugsweise sind unter dem Ausdruck *"zueinander benachbarter Teilchen"* nicht nur die direkt benachbarten Teilchen zu verstehen, sondern auch solche Teilchen, die wiederum den direkt benachbarten Teilchen eines Teilchens direkt benachbart sind, d.h. Teilchen, die über die erste Sphäre hinausgehen und innerhalb einer zweiten Sphäre um ein Teilchen angeordnet sind.

Zur Bildung einer Brandschutzschicht sind zueinander benachbarte Teilchen des schichtartig aufgebauten, physikalisch wirkenden Treibmittels im Wesentlichen parallel zueinander angeordnet. Daraus ergibt sich, dass innerhalb einer Brandschutzschicht alle Teilchen des schichtartig aufgebauten, physikalisch wirkenden Treibmittels im Wesentlichen parallel zueinander angeordnet sein können. Dies stellt eine bevorzugte Ausführungsform der vorliegenden Erfindung dar.

Eine im Wesentlichen parallele Ausrichtung aller Teilchen des schichtartig aufgebauten, physikalisch wirkenden Treibmittels innerhalb einer Brandschutzschicht ist jedoch nicht zwingend erforderlich, um den erfindungswesentlichen Effekt einer gezielten Expansion in im Wesentlichen eine Raumrichtung zu erzielen. Dies ist beispielsweise der Fall, wenn das erfindungsgemäße Brandschutzelement in Form einer langen Bandage ausgestaltet ist, die beispielsweise um eine Leitungsdurchführung gewickelt ist, die durch eine Durchgangsöffnung hindurchführt. In diesem Fall sind die zueinander benachbarten Teilchen des schichtförmig aufgebauten, physikalisch wirkenden Treibmittels im Wesentlichen parallel angeordnet, wohingegen aufgrund der Wicklung und der damit einhergehenden Krümmung der Bandage nicht alle Teilchen im Wesentlichen parallel zueinander angeordnet sind. Sind die zueinander benachbarten Teilchen in diesem Fall in Längsrichtung der Bandage im Wesentlichen parallel zueinander angeordnet, findet die Expansion im Brandfall im Wesentlichen in Richtung der Durchgangsöffnung statt.

Zur Bildung einer Brandschutzschicht kann das schichtartig aufgebaute, physikalisch wirkende Treibmittel innerhalb des Trägermaterials eingebettet sein und/oder auf einer oder mehreren Flächen der Oberfläche des Trägermaterials aufgebracht sein.

In einer bevorzugten Ausführungsform ist das schichtartig aufgebaute, physikalisch wirkende Treibmittel innerhalb des Trägermaterials eingebettet. Vorzugsweise ist das schichtartig aufgebaute, physikalisch wirkende Treibmittel im Wesentlichen gleichmäßig innerhalb des Trägermaterials verteilt. Es ist aber auch möglich, dass die Konzentration des schichtartig aufgebauten, physikalisch wirkenden Treibmittels im Trägermaterial variiert. So kann die Konzentration des schichtartig aufgebauten, physikalisch wirkenden Treibmittels beispielsweise punktuell, musterartig flächig und/oder sandwichartig variant sein. Eine variable Konzentration hat den Vorteil, dass damit gezielt an bestimmten Stellen des Brandschutzelementes eine verstärkte Expansion erzielt werden.

In einer weiteren bevorzugten Ausführungsform ist das schichtartig aufgebaute, physikalisch wirkende Treibmittel auf einer oder mehreren Flächen der Oberfläche des Trägermaterials aufgebracht, insbesondere mindestens auf der der Funktionsschicht zugewandten Fläche.

In einer weiteren bevorzugten Ausführungsform ist das schichtartig aufgebaute, physikalisch wirkende Treibmittel sowohl innerhalb des Trägermaterials eingebettet als auch auf einer oder mehreren Flächen der Oberfläche des Trägermaterials aufgebracht.

Das schichtartig aufgebaute, physikalisch wirkende Treibmittel kann je nach Anwendungsfall in einem sehr breiten gewichtsprozentualen Bereich in der Brandschutzschicht vorhanden sein. Es ist jedoch bevorzugt, dass das schichtartig aufgebaute, physikalisch wirkende Treibmittel in einer Menge von 10 bis 90 Gew.-%, bevorzugt von 15 bis 70 Gew.-%, besonderes bevorzugt von 20 bis 55 Gew.-%, in der jeweiligen Brandschutzschicht enthalten ist, bezogen auf die Summe des Festkörpergehalts des Trägermaterials und des schichtartig aufgebauten, physikalisch wirkenden Treibmittels.

Vorzugsweise beträgt die Menge des schichtartig aufgebauten, physikalisch wirkenden Treibmittels bezogen auf das Gesamtgewicht des Brandschutzelementes von 8 bis 70 Gew.-%, bevorzugt von 12 bis 55 Gew.-% und insbesondere von 15 bis 40 Gew.-%.

Die mittlere Teilchengröße des schichtartig aufgebauten, physikalisch wirkenden Treibmittels kann je nach Anwendungsfall in einem breiten Bereich liegen. Vorzugsweise hat das schichtartig aufgebaute, physikalisch wirkende Treibmittel eine mittlere Teilchengröße von 50 µm bis 4,0 mm, bevorzugt von 80 µm bis 3,5 mm und besonders bevorzugt von 100 µm bis 3,0 mm. Die mittlere Teilchengröße kann nach den dem Fachmann bekannten Methoden, wie beispielsweise mittels Siebanalyse nach DIN 66165 (2016), bestimmt werden.

Das schichtartig aufgebaute, physikalisch wirkende Treibmittel ist bevorzugt aus der Gruppe bestehend aus Graphit-Interkallationsverbindungen (auch bekannt als Blähgraphit), Schichtsilikat-Interkallationsverbindungen und Kombinationen davon ausgewählt, wobei Graphit-Interkallationsverbindungen oder blähfähiger Vermiculit bevorzugt sind.

Als Graphit-Interkallationsverbindungen kommen beispielsweise bekannte Einlagerungsverbindungen von SO_{x,} NO_{x,} Halogen und/oder starken Säuren in Graphit in Frage. Diese werden auch als Graphitsalze bezeichnet. Bevorzugt sind Graphit-Interkallationsverbindungen, die bei Temperaturen (Aktivierungstemperaturen) von beispielsweise 120 bis 350°C unter Aufblähen SO₂, SO₃, NO und/oder NO₂ abgeben. Für die vorliegende Erfindung geeignete Blähgraphite sind im Handel erhältlich.

Vorzugsweise haben die Graphit-Interkallationsverbindungen eine mittlere Teilchengröße von 50 µm bis 1,0 mm, bevorzugt von 70 µm bis 0,7 mm und besonders bevorzugt von 90 µm bis 0,5 mm.

Als Schichtsilikat-Interkallationsverbindungen (expandierbare Schichtsilikate) kommen beispielsweise solche Verbindungen in Betracht, die durch Einlagerung von Interkallationsverbindungen in native, blähfähige Schichtsilikate, insbesondere nativen Vermiculit, erhältlich sind. Als Interkallationsverbindung sind Vertreter der Alkoholate von Lithium und Kalium und Salze von Lithium, Natrium und Kalium mit organischen Säuren und/oder wässrige Lösungen dieser bevorzugt, die durch Kationenaustausch in das native Schichtsilikat einlagert werden. In dieser Hinsicht wird Bezug genommen auf die DE 1029083 A1 sowie die darin genannte Literatur, z.B. EP 0 429 246 A1 deren Inhalte hiermit in diese Anmeldung aufgenommen werden.

Vorzugsweise haben die Schichtsilikat-Interkallationsverbindungen eine mittlere Teilchengröße von 100 µm bis 4,0 mm, bevorzugt von 120 µm bis 3,5 mm und besonders bevorzugt von 150 µm bis 3,0 mm.

Umfasst das Brandschutzelement mehr als eine Brandschutzschicht, so umfassen gemäß einer bevorzugten Ausführungsform alle Brandschutzschichten gleiche oder verschiedene Graphit-Interkallationsverbindungen, insbesondere umfassen alle Brandschutzschichten die gleiche Graphit-Interkallationsverbindung.

Es kann vorgesehen sein, dass das Trägermaterial weiterhin mindestens eine organische und/oder anorganische Faser umfasst, welche insbesondere aus der Gruppe bestehend aus Glasfaser, Keramikfaser, Carbonfaser, Polyamidfaser, Metallfaser, Borfaser, Naturfaser, Steinfaser und Mischungen davon, ausgewählt ist. Die Anwesenheit einer organischen und/oder anorganischen Faser im Trägermaterial erleichtert die Einarbeitung und Orientierung des schichtartig aufgebauten, physikalisch wirkenden Treibmittels in das Trägermaterial. Besonders geeignete Fasern sind Glasfasern und/oder Metallfasern, insbesondere aus E-Glas, Silikatfasern oder Mineralwollfasern.

Die organischen bzw. anorganischen Fasern haben bevorzugt eine Länge von 1 mm bis 25 mm, stärker bevorzugt von 2 mm bis 20 mm und besonders bevorzugt von 3 mm bis 15 mm. Beispielhaft können hier Glasfasern der Firma STW erwähnt werden.

Die organischen bzw. anorganischen Fasern sind bevorzugt in einer Menge von 0,1 bis 25,0 Gew.-%, bevorzugt von 0,5 bis 15,0 Gew.-%, besonderes bevorzugt von 1,0 bis 6,0 Gew.-% in der jeweiligen Brandschutzschicht enthalten ist, bezogen auf die Summe des Festkörpergehalts des Trägermaterials und des schichtartig aufgebauten, physikalisch wirkenden Treibmittels.

Da die im Brandfall gebildete Aschekruste unter Umständen zu instabil ist und daher abhängig von deren Dichte und Struktur etwa durch Luftströmungen verblasen werden kann, was sich negativ auf die abschottende Wirkung des Brandschutzelementes auswirkt, kann das Trägermaterial zusätzlich mindestens einen Aschekrustenstabilisator enthalten.

Ein *"Aschekrustenstabilisator"* ist eine sogenannte gerüstbildende Verbindung, die das Kohlenstoffgerüst (Aschekruste), das aus dem physikalisch wirkenden Treibmittel und dem Trägermaterial gebildet wird, stabilisiert. Die prinzipielle Wirkungsweise ist dabei die, dass die an sich sehr weichen entstehenden Kohlenstoffschichten durch anorganische Verbindungen mechanisch verfestigt werden. Die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abfallen verhindern, wodurch die isolierende Wirkung aufrechterhalten oder verstärkt wird.

Als Aschekrustenstabilisatoren bzw. Gerüstbildner kommen die üblicherweise in Brandschutzformulierungen verwendeten und dem Fachmann bekannten Verbindungen in Betracht, beispielsweise teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengröße von ≤50 µm, vorzugsweise von 0,5 bis 10 µm besitzt. Im Fall der Verwendung des teilchenförmigen Metalls in Form von Fasern, Fäden und/oder Whiskers ist eine Dicke von 0,5 bis 10 µm und eine Länge von 10 bis 50 µm bevorzugt. Als Aschekrustenstabilisator kann alternativ oder zusätzlich ein Oxid oder eine Verbindung eines Metalls aus der Aluminium, Magnesium, Eisen oder Zink umfassenden Gruppe eingesetzt werden, insbesondere Eisenoxid, vorzugsweise Eisentrioxid, Titandioxid, und/oder ein Borat, wie Zinkborat. Beispiele derartiger Additive finden sich auch in US 4 442 157 A, US 3 562 197 A, GB 755 551 A sowie EP 138 546 A1.

Bevorzugt ist der Aschekrustenstabilisator eine phosphorhaltige Verbindung, die unter Salzen und Derivaten der Oxosäuren des Phosphors ausgewählt ist. Die Oxosäuren des Phosphors werden eingesetzt, da deren Palette sehr groß ist. Bei den Oxosäuren des Phosphors handelt es sich um Phosphorsäure (H₃PO₄) (auch als Orthophosphorsäure bezeichnet), Diphospohrsäure (H₄P₂O₇) (auch als Pyrophosphorsäure bezeichnet), Triphosphorsäure (H₅P₃O₁₀), Polyphosphorsäure (Hₙ₊₂PₙO₃ₙ₊₁), Polymetaphosphorsäure ((HPO₃)ₙ), Hypophosphorsäure (H₄P₂O₆) (auch Diphosphor(IV)-säure), Diphosphor(III,V)-säure (H₄P₂O₆), Phosphonsäure (H₃PO₂(2)), wobei die Zahl in der Klammer die maximale Basigkeit der Säure bezeichnet, wenn diese sich von der Gesamtzahl der H-Atome in der Formel unterscheidet) (auch als phosphorige Säure bezeichnet), Diphosphonsäure (H₄P₂O₅(2)), wobei die Zahl in der Klammer die maximale Basigkeit der Säure bezeichnet, wenn diese sich von der Gesamtzahl der H-Atome in der Formel unterscheidet) (auch als diphosphorige Säure bezeichent), Phosphinsäure (H₃PO₂(1)), wobei die Zahl in der Klammer die maximale Basigkeit der Säure bezeichnet, wenn diese sich von der Gesamtzahl der H-Atome in der Formel unterscheidet.

Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminpolyphosphate, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphaten sind dabei Verbindungen wie Umsetzungsprodukte aus Lamelite C (Melamin-Formaldehyd-Harz) mit Phosphorsäure zu verstehen.

Der Aschekrustenstabilisator ist bevorzugt in einer Menge von etwa 5 bis 35 Gew.-%, bevorzugt 7 bis 30 Gew.-%, besonders bevorzugt 10 bis 28 Gew.-%, in der jeweiligen Brandschutzschicht enthalten, bezogen auf die Summe des Festkörpergehalts des Trägermaterials und des schichtartig aufgebauten, physikalisch wirkenden Treibmittels.

Darüber hinaus können weitere Brandschutzadditive, insbesondere solche, die eine chemische Intumeszenz bewirken, und solche, welche ablativ wirken, in der Zusammensetzung enthalten sein. Als *"chemische Intumeszenz"* wird die Bildung einer voluminösen, isolierenden Ascheschicht durch aufeinander abgestimmte Verbindungen, die bei Hitzeeinwirkung miteinander reagieren, bezeichnet. Diese sind im Allgemeinen ein Kohlenstofflieferant, ein Säurebildner und ein Gasbildner.

Als *"Kohlenstofflieferant"* wird eine organische Verbindung bezeichnet, die durch unvollständige Verbrennung ein Kohlenstoffgerüst hinterlässt und nicht vollständig zu Kohlendioxid und Wasser verbrennt (Carbonifizierung). Diese Verbindungen werden auch als *"Kohlenstoffgerüstbildner"* bezeichnet. Als *"Säurebildner"* wird eine Verbindung bezeichnet, die sich unter Hitzeeinwirkung, d.h. oberhalb etwa 150°C beispielsweise durch Zersetzung eine nicht flüchtige Säure bildet und dadurch als Katalysator für die Carbonifizierung wirkt. Zudem kann sie zur Erniedrigung der Viskosität der Schmelze des Trägermaterials beitragen. Hiermit gleichbedeutend wird der Begriff *"Dehydrierungskatalysator"* verwendet. Ein *"Gasbildner"* ist eine Verbindung, die sich bei erhöhter Temperatur unter Entwicklung inerter, d.h. nicht-brennbarer Gase zersetzt und das durch die Carbonifizierung gebildet Kohlenstoffgerüst und gegebenenfalls das erweichte Bindemittel zu einem Schaum aufbläht (Intumeszenz).

Gegebenenfalls kann das Trägermaterial weitere übliche Zusätze enthalten, wie Weichmacher, Füllstoffe, Pigmente, Additive zur Einstellung der rheologischen Eigenschaften, Verdickungsmittel, Dispergierhilfsmittel, Emulgatoren, Biozide, Fungizide, Konservierungs- und Alterungsschutzmittel, Frostschutzmittel, Netzmittel, Entschäumer und/oder Hautbildungsverzögerer. Diese weiteren Zusätze sind handelsübliche Produkte, die dem Fachmann bekannt sind.

Als Füllstoffe können die üblicherweise verwendeten und dem Fachmann bekannten Füllstoffe verwendet werden. Als Füllstoffe können beispielhaft erwähnt werden: Kreide, Bariumsulfat, Quarz, Talkum, Kaolin, Calciumsulfat und/oder Calciumsilikat. Der Füllstoff kann alleine oder als Gemisch von zwei oder mehreren verwendet werden.

Als Pigmente kann das Trägermaterial vorzugsweise Eisenoxid, Titandioxid, Zinksulfid, Zinkoxid und/oder organische oder anorganische Farbpigmente enthalten.

Die Additive können in einer Menge von etwa 0,25 bis 2,5 Gew.-%, bevorzugt 0,5 bis 1,7 Gew.-%, besonders bevorzugt 0,8 bis 1,6 Gew.-%, in der jeweiligen Brandschutzschicht enthalten, bezogen auf die Summe des Festkörpergehalts des Trägermaterials und des schichtartig aufgebauten, physikalisch wirkenden Treibmittels.

Vorzugsweise weist die Brandschutzschicht eine mittlere maximale Schichtdicke von ≤ 10 mm, bevorzugter von ≤ 8 mm und besonders bevorzugt von ≤ 5 mm auf. In einer bevorzugten Ausführungsform hat die Brandschutzschicht eine mittlere Schichtdicke von 0,5 mm bis 4,6 mm. Umfasst das erfindungsgemäße Brandschutzelement zwei oder mehr Brandschutzschichten, so können diese Brandschutzschichten die gleichen oder unterschiedliche mittlere Schichtdicken aufweisen. Es ist bevorzugt, dass die Brandschutzschichten des Brandschutzelementes annähernd gleiche mittlere Schichtdicken aufweisen.

Die Funktionsschicht hat erfindungsgemäß eine Temperaturbeständigkeit bis mindestens 300 °C. Bevorzugt hat die Funktionsschicht eine Temperaturbeständigkeit bis mindestens 400 °C, bevorzugter bis mindestens 450 °C, weiter bevorzugt bis mindestens 500 °C, und am meisten bevorzugt bis mindestens 550 °C. Im Sinne der vorliegenden Erfindung ist unter dem Begriff der Temperaturbeständigkeit die Widerstandsfähigkeit der Funktionsschicht gegenüber hohen Temperaturen zu verstehen. Beim Überschreiten der Temperaturbeständigkeit ändern sich die temperaturabhängigen Eigenschaften so stark, dass das Material nicht mehr den Anforderungen genügt oder zerstört wird. Im Sinne der vorliegenden Erfindung bedeutet Temperaturbeständigkeit insbesondere, dass bis zur angegebenen Temperaturgrenze keine Zersetzung, kein Schmelzen oder Verbrennen oder sonstige gravierende Änderung der Materialeigenschaften stattfindet, wodurch die Wirkungsweise der Funktionsschicht verloren geht.

Die Funktionsschicht erstreckt sich vorzugsweise kontinuierlich entlang der Brandschutzschicht bzw. beim Vorhandensein von zwei oder mehr Brandschutzschichten kontinuierlich zwischen den Brandschutzschichten. Im Sinne der vorliegenden Erfindung bedeutet dies, dass die Funktionsschicht nicht unterbrochen ist.

Es ist erfindungswesentlich, dass die Funktionsschicht mindestens ein semi-rigides Material umfasst bzw. bevorzugt aus mindestens einem semi-rigiden Material besteht.

Unter dem Ausdruck *"semi-rigides Material"* im Sinne der vorliegenden Erfindung ist ein Material zu verstehen, welches sowohl eine ausreichende mechanische Festigkeit aufweist, um den von der Brandschutzschicht ausgehenden Blähdruck aufnehmen zu können, als auch eine ausreichende Flexibilität, so dass die Expansion des physikalisch wirkenden Treibmittels nicht behindert wird.

Vorzugsweise wird das semi-rigide Material ausgewählt aus der Gruppe bestehend aus Faserverbundmaterialien, Metallen, Metalllegierungen und Kombinationen daraus.

In einer Ausführungsform der Erfindung umfasst die Funktionsschicht ein Faserverbundmaterial. Es kann vorgesehen sein, dass das Faserverbundmaterial eine technische Faser aus der Gruppe bestehend aus Glasfaser, Keramikfaser, Carbonfaser, Polyamidfaser, Metallfaser, Borfaser, Naturfaser, Steinfaser und Mischungen davon, umfasst. Es ist dabei vorteilhaft, dass das Faserverbundmaterial aus Mono- und/oder Endlosfilamenten aufgebaut ist, die einen stabilen Endlosfaden ergeben. Diese Endlosfäden sind vorzugsweise so miteinander verbunden, dass sie eine hohe Zugfestigkeit aufweisen.

In einer anderen Ausführungsform der Erfindung wird die Funktionsschicht gebildet aus einem oder mehreren Metallen und/oder einer oder mehreren Metalllegierungen, insbesondere aus Aluminium und/oder Eisen.

Vorzugsweise wird die Funktionsschicht aus einer in mindestens zwei Dimensionen durchgängigen Struktur gebildet. Dabei ist es bevorzugt, dass die Funktionsschicht als Folie, als perforierte Platte, als Matte, als Gitter oder als Gewebe ausgebildet ist.

Es hat sich als vorteilhaft erwiesen, dass das semi-rigide Material ausgewählt ist aus der Gruppe bestehend aus Streckmetall, Glasfasermaterial, Aluminiumfolie und Kombinationen daraus.

Bevorzugt umfasst das semi-rigide Material ein Glasfasermaterial, insbesondere ein Glasfaservlies, Glasfasergelege, Glasfasergewirke, ein Glasfasergewebe oder Kombinationen daraus. Um eine ausreichende Temperaturstabilität bei Glasfasermaterialien zu erzielen, die keine direkte Verwebung aufweisen, wie beispielsweise Glasfaservlies oder Glasfasergewirken, müssen die einzelnen Fäden untereinander mittels eines Klebstoffes fixiert werden, der eine ausreichende Temperaturstabilität aufweist. Hierfür eignen sich beispielsweise Epoxid-basierte Klebstoffe, die vorzugsweise eine Temperaturstabilität von mindestens 180 °C, bevorzugter von mindestens 205 °C und insbesondere von mindestens 220 °C aufweisen. Das Glasfasermaterial weist vorzugsweise ein Flächengewicht im Bereich von 50 bis 1500 g/m², bevorzugt im Bereich von 100 bis 1300 g/m², bevorzugter 150 g/m² bis 900 g/m² und insbesondere im Bereich von 180 bis 700 g/m² auf. Es ist bevorzugt, dass das Glasfasermaterial ein mit Stahlfasern verstärktes Glasmaterial ist, insbesondere ein mit Stahlfasern verstärktes Glasfasergewebe. Entsprechende mit Stahlfasern verstärkte Glasfasergewebe sind beispielsweise von der Firma HKO erhältlich.

In einer besonders bevorzugten Ausführungsform ist das semi-rigide Material ein Glasfasergewebe und die Funktionsschicht besteht daraus, insbesondere weist das Glasfasergewebe ein Flächengewicht von 180 bis 700 g/m² auf.

Alternativ umfasst das semi-rigide Material vorzugsweise mindestens ein Streckmetall. Das Streckmetall weist vorzugsweise eine mittlere Maschenweite von ≤ 15 mm x 10 mm, bevorzugt ≤ 12 mm x 9 mm und insbesondere ≤ 10,5 mm x 7 mm auf, wobei die Untergrenze der mittleren Maschenweite jeweils bei ≥ 1,5 mm x 0,6 mm liegt. In einer besonders bevorzugten Ausführungsform ist das semi-rigide Material ein Streckmetall und die Funktionsschicht besteht daraus, insbesondere weist das Streckmetall eine mittlere Maschenweite von 6 mm x 3,4 mm bis 2,5 mm x 1,7 mm auf.

Die mittlere Schichtdicke der Funktionsschicht kann prinzipiell kleiner, gleich oder größer als die mittlere Schichtdicke der Brandschutzschicht sein. Zweckmäßig liegt das Verhältnis der mittleren Schichtdicke einer Brandschutzschicht zur mittleren Schichtdicke einer Funktionsschicht im Brandschutzelement in einem Verhältnis von 1:3 bis 10:1. Ist die Funktionsschicht sehr dünn ausgestaltet, wie beispielsweise ≤ 50 µm, kann das Verhältnis auch vom vorgenannten Bereich abweichen. Hier ist das Verhältnis der mittleren Schichtdicke der Brandschutzschicht zur mittleren Schichtdicke der Funktionsschicht im Brandschutzelement vorzugsweise in einem Verhältnis von 1:1 bis 50:1. Vorzugsweise hat die Funktionsschicht dabei eine maximale Schichtdicke von ≤ 5 mm, bevorzugter von ≤ 2,5 mm und besonders bevorzugt von ≤ 1 mm. In einer bevorzugten Ausführungsform hat die Funktionsschicht eine Schichtdicke von 8 µm bis 1,5 mm.

Umfasst das erfindungsgemäße Brandschutzelement mehr als eine Funktionsschicht, so können die Funktionsschichten gleich oder verschieden aufgebaut sein. In diesem Fall ist es jedoch vorteilhaft, dass die vorhandenen Funktionsschichten möglichst gleich aufgebaut sind. Die zwei oder mehr Funktionsschichten können gleiche oder unterschiedliche mittlere Schichtdicken aufweisen. Es ist jedoch bevorzugt, wenn die Funktionsschichten annähernd gleiche mittlere Schichtdicken aufweisen.

Optional können eine oder mehrere Brandschutzschichten und/oder eine oder mehrere Funktionsschichten zusätzlich eine oder mehrere Zwischenschichten (6) aufweisen. Als Zwischenschicht kommt beispielsweise eine Klebeschicht in Betracht, die verwendet wird, um zumindest eine partiell stoffschlüssige Verbindung zwischen der Brandschutzschicht und der Funktionsschicht herzustellen. Zur Herstellung der Klebeschicht kommen die üblicherweise verwendeten und dem Fachmann bekannten Materialien in Betracht. Hierzu zählen beispielsweise die in der Schrift EP1161348 A1 aufgeführten Materialien, deren Inhalt hiermit in die vorliegende Anmeldung aufgenommen wird.

Vorzugsweise weist die Zwischenschicht eine mittlere maximale Schichtdicke von ≤ 0,1 mm, bevorzugter von ≤ 0,05 mm und besonders bevorzugt von ≤ 0,025 mm auf. In einer bevorzugten Ausführungsform hat die Zwischenschicht eine Schichtdicke von 5 µm bis 0,025 mm. Umfasst das erfindungsgemäße Brandschutzelement zwei oder mehr Zwischenschichten, so können diese Zwischenschichten gleiche oder unterschiedliche mittlere Schichtdicken aufweisen. Es ist bevorzugt, dass die Zwischenschichten des Brandschutzelementes annährend gleiche mittlere Schichtdicken aufweisen.

Es ist aber auch möglich eine im Wesentlichen stoffschlüssige Verbindung ohne die Verwendung einer Klebeschicht herzustellen. In dieser bevorzugten Ausführungsform wird die Funktionsschicht in das noch nicht getrocknete Trägermaterial der Brandschutzschicht gelegt und/oder gepresst und anschließend erfolgt die Härtung des Trägermaterials durch physikalisches Trocken.

Zur Ausbildung des Brandschutzelements im Sinne der vorliegenden Erfindung können theoretisch eine hohe Anzahl an Brandschutzschichten und Funktionsschichten miteinander kombiniert werden. Es ist jedoch zweckmäßig, dass das erfindungsgemäße Brandschutzelement insgesamt maximal 22 Schichten aufweist.

Das erfindungsgemäße Brandschutzelement kann in allen Formen ausgestaltet sein, die geometrisch den Einsatz als Brandschutzelement ermöglichen. In einer bevorzugten Ausführungsform ist das Brandschutzelement streifenförmig ausgestaltet und liegt in Form einer Endlosbandage vor.

### Kurzbeschreibung der Zeichnungen

Ausführungsformen werden anhand der beigefügten Zeichnungen näher erläutert.
- Figur 1: zeigt eine Querschnittsdarstellung einer bevorzugten Ausführungsform eines erfindungsgemäßen Brandschutzelementes;
- Figur 2: zeigt eine Querschnittsdarstellung einer alternativen bevorzugten Ausführungsform eines erfindungsgemäßen Brandschutzelements;
- Figur 3: ist unterteilt in drei Querschnittsdarstellungen (Fig. 3a, Fig. 3b und Fig. 3c), die bevorzugte Ausführungsform eines erfindungsgemäßen Brandschutzelements mit einem dreischichtigen Aufbau zeigen;
- Figur 4: zeigt eine Querschnittsdarstellung eines erfindungsgemäßen Brandschutzelementes mit drei Brandschutzschichten und zwei Funktionsschichten;
- Figur 5: zeigt eine Querschnittsdarstellung einer bevorzugten Ausführungsform eines erfindungsgemäßen Brandschutzelementes mit zusätzlichen in den Brandschutzschichten angeordneten Zwischenschichten;
- Figur 6: zeigt eine Fotographie einer Gegenüberstellung eines aus dem Stand der Technik bekannten Brandschutzelementes (links) und eines erfindungsgemäßen Brandschutzelementes (rechts);
- Figur 7: zeigt eine Fotographie einer Gegenüberstellung eines dreischichtigen expandierten Schichtkörpers aus dem Stand der Technik und eines dreischichtigen expandierten Schichtkörpers im Sinne der vorliegenden Erfindung.

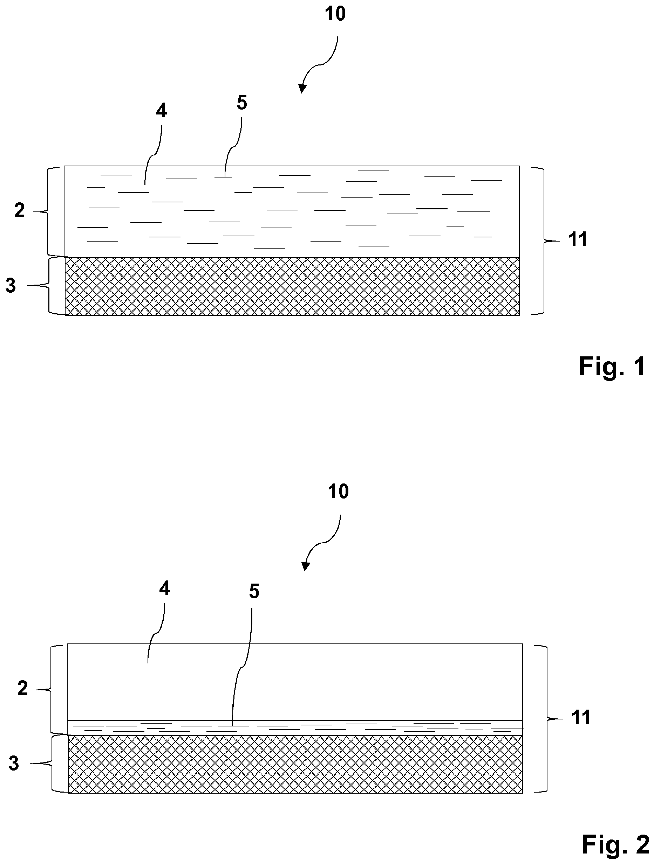

In Figur 1 ist eine Querschnittsdarstellung einer Ausführungsform eines erfindungsgemäßen Brandschutzelementes (10) mit einem zweischichtigen Schichtkörper (11) dargestellt. Der Schichtkörper (11) umfasst eine Brandschutzschicht (2) und eine Funktionsschicht (3). Zur Bildung des Schichtkörpers (11) sind die Brandschutzschicht (2) und die Funktionsschicht (3) stoffschlüssig miteinander verbunden. Die Brandschutzschicht (2) umfasst ein Trägermaterial (4) und ein schichtartig aufgebautes, physikalisch wirkendes Treibmittel (5), wobei das schichtartig aufgebaute, physikalisch wirkende Treibmittel (5) innerhalb des Trägermaterials eingebettet ist und im Wesentlichen gleichmäßig innerhalb des Trägermaterials verteilt ist. Zueinander benachbarte Teilchen des schichtartig aufgebauten, physikalisch wirkenden Treibmittels (5) sind im Wesentlichen parallel zueinander angeordnet.

In Figur 2 ist eine Querschnittsdarstellung einer alternativen Ausführungsform eines erfindungsgemäßen Brandschutzelementes (10) mit einem zweischichtigen Schichtkörper (11) dargestellt. Im Vergleich zur Darstellung in Fig. 1 ist das schichtartig aufgebaute, physikalisch wirkende Treibmittel (5) auf der Fläche der Oberfläche des Trägermaterials (4) aufgebracht, die der Funktionsschicht (3) zugewandt ist.

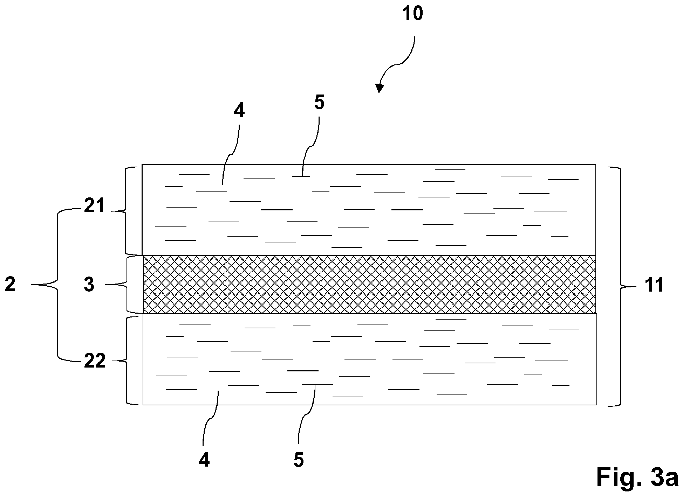

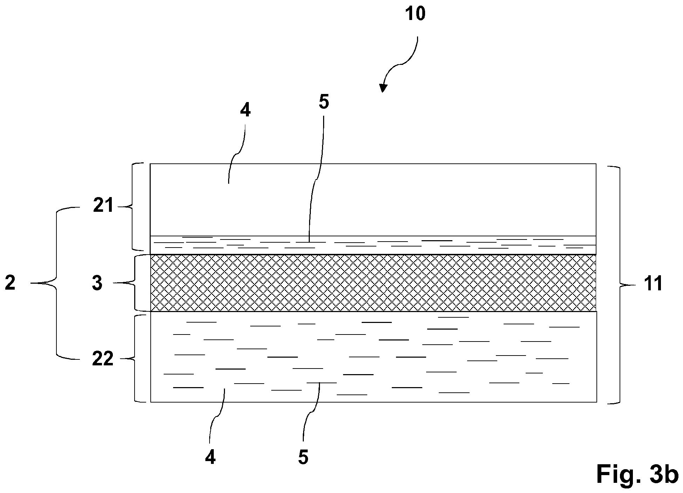

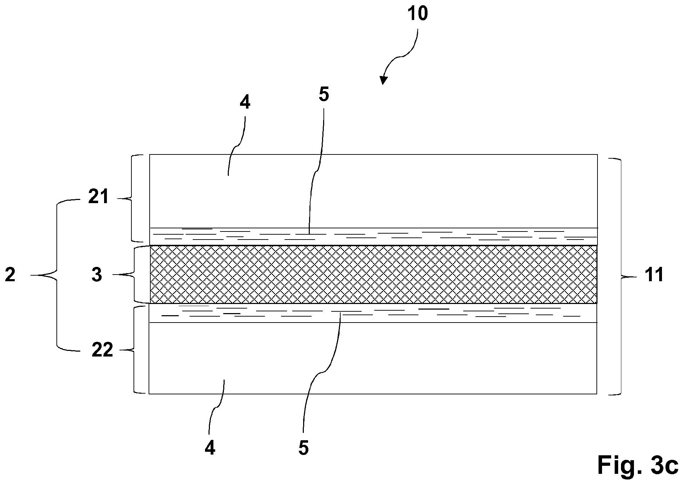

Figur 3 ist unterteilt in die drei Querschnittsdarstellungen mit den Fig. 3a, Fig. 3b und Fig. 3c, welche alternative Ausführungsformen eines bevorzugten Brandschutzelementes umfassend einen Schichtkörper (11) mit einem dreischichtigen Aufbau. Der Schichtkörper (11) umfasst die beiden Brandschutzschichten (21) und (22). Zwischen den beiden Brandschutzschichten (21) und (22) ist eine Funktionsschicht (3) angeordnet, die zur Bildung des Schichtkörpers (11) jeweils im Wesentlichen stoffschlüssig mit der Brandschutzschicht (21) und der Brandschutzschicht (22) verbunden ist. Die Brandschutzschichten umfassen jeweils ein Trägermaterial (4) und ein schichtartig aufgebautes, physikalisch wirkendes Treibmittel (5). In Figur 3a ist in beiden Brandschutzschichten (21) und (22) das schichtartig aufgebaute, physikalisch wirkende Treibmittel (5) innerhalb des Trägermaterials (4) eingebettet ist und im Wesentlichen gleichmäßig innerhalb des Trägermaterials (4) verteilt. In Fig. 3b ist in der Brandschutzschicht (22) das schichtartig aufgebaute, physikalisch wirkende Treibmittel (5) innerhalb des Trägermaterials (4) eingebettet und im Wesentlichen gleichmäßig innerhalb des Trägermaterials (4) verteilt. In der Brandschutzschicht (21) ist das schichtartig aufgebaute, physikalisch wirkende Treibmittel (5) auf der Fläche der Oberfläche des Trägermaterials (4) aufgebracht, die der Funktionsschicht (3) zugewandt ist. In Fig. 3c ist in beiden Brandschutzschichten (21) und (22) das schichtartig aufgebaute, physikalisch wirkende Treibmittel (5) auf der Fläche der Oberfläche des Trägermaterials (4) aufgebracht, die der Funktionsschicht (3) zugewandt ist.

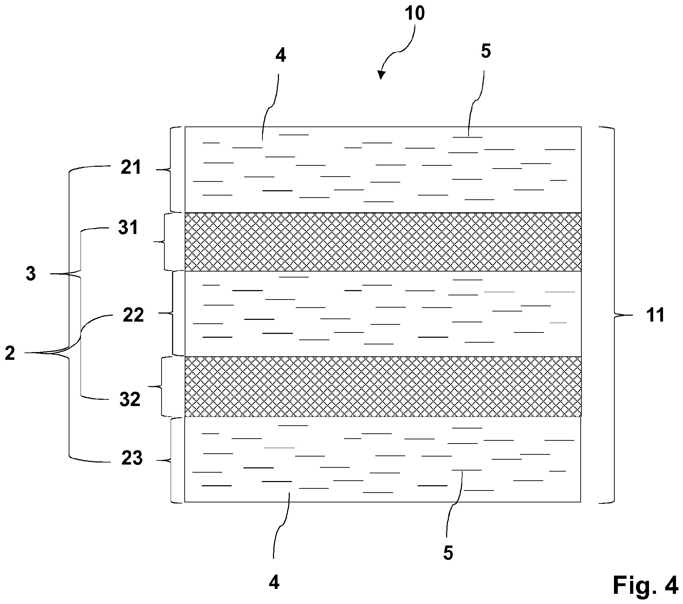

Figur 4 zeigt eine Querschnittsdarstellung eines erfindungsgemäß bevorzugten Brandschutzelementes (10) umfassend einen Schichtkörper (11) mit drei Brandschutzschichten (21), (22) und (23) und zwei Funktionsschichten (31) und (32). Die Funktionsschicht (31) ist zwischen den Brandschutzschichten (21) und (22) angeordnet und die Funktionsschicht (32) zwischen den Brandschutzschichten (22) und (23), wobei die zueinander benachbarten Brandschutzschichten (2) und Funktionsschichten (3) im Wesentlichen stoffschlüssig miteinander verbunden sind. Die Brandschutzschichten (21), (22) und (23) umfassen ein Trägermaterial (4) und ein schichtartig aufgebautes, physikalisch wirkendes Treibmittel (5), wobei das schichtartig aufgebaute, physikalisch wirkende Treibmittel (5) innerhalb des Trägermaterials (4) eingebettet ist und im Wesentlichen gleichmäßig innerhalb des Trägermaterials (4) verteilt ist. Zueinander benachbarte Teilchen des schichtartig aufgebauten, physikalisch wirkenden Treibmittels (5) sind im Wesentlichen parallel zueinander angeordnet.

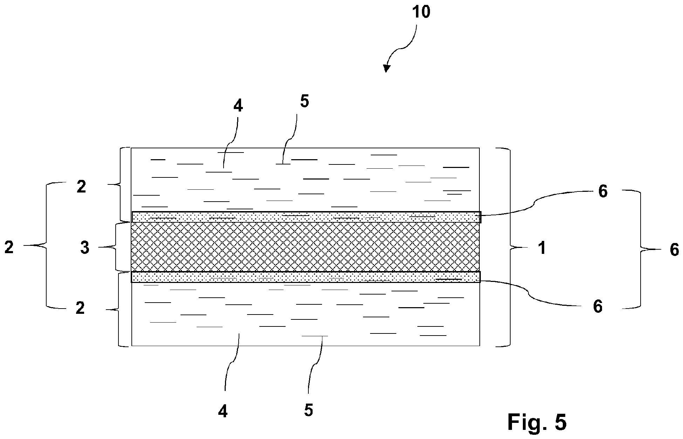

Figur 5 zeigt eine Querschnittsdarstellung einer bevorzugten Ausführungsform eines erfindungsgemäßen Brandschutzelementes (10) mit einem Schichtkörper (11) umfassend die beiden Brandschutzschichten (21) und (22). Zwischen den beiden Brandschutzschichten (21) und (22) ist eine Funktionsschicht (3) angeordnet. Die Brandschutzschichten (21) und (22) umfassen zusätzlich jeweils eine Zwischenschicht (61) und (62), beispielsweise in Form einer Klebeschicht, zur Herstellung einer im Wesentlich stoffschlüssigen Verbindung der zueinander benachbarten Brandschutzschichten (2) und Funktionsschicht (3).

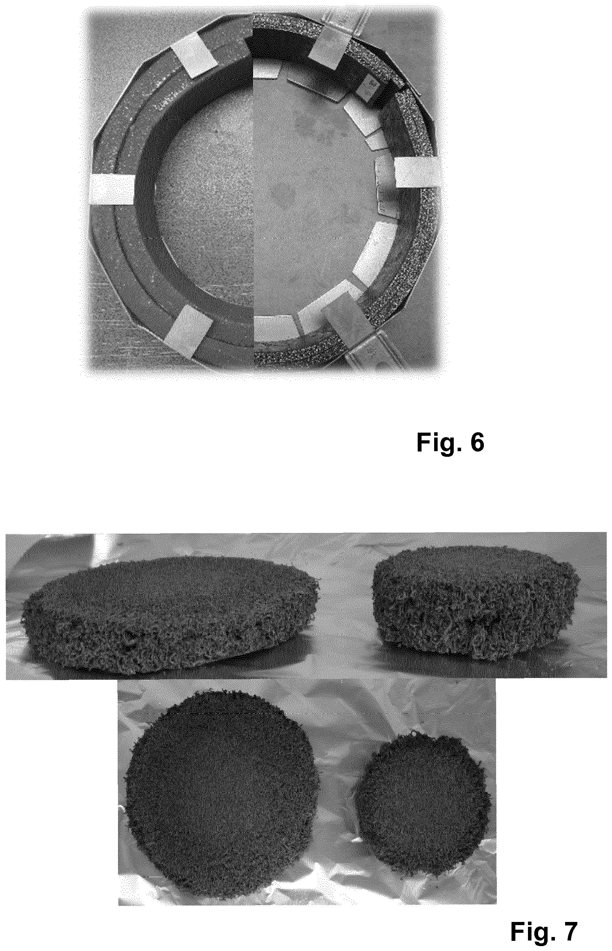

Figur 6 zeigt eine Fotographie einer Gegenüberstellung eines aus dem Stand der Technik bekannten Brandschutzelementes (links) und eines erfindungsgemäßen Brandschutzelementes (rechts). Schon der visuelle Vergleich zeigt, dass Brandschutzelemente im Sinne der vorliegenden Erfindung mit wesentlich dünneren Brandschutzschichten auskommen als Brandschutzelemente aus dem Stand der Technik.

Figur 7 zeigt eine Fotographie einer Gegenüberstellung eines dreischichtigen expandierten Schichtkörpers aus dem Stand der Technik (links) und eines dreischichtigen expandierten Schichtkörpers (rechts) im Sinne der vorliegenden Erfindung nach Durchführung einer Expansionsmessung.

Die Erfindung ist nicht auf die gezeigten Ausführungsformen beschränkt. Insbesondere können einzelne Merkmale einer Ausführungsform unabhängig von den anderen Merkmalen der entsprechenden Ausführungsform in einer weiteren erfindungsgemäßen Ausführungsform enthalten sein, d.h. die beschriebenen Merkmale sind beliebig miteinander kombinierbar.

Gemäß einem zweiten Aspekt der vorliegenden Erfindung ist ein Verfahren zur Herstellung des erfindungsgemäßen Brandschutzelementes vorgesehen. Das erfindungsgemäße Verfahren umfasst die folgenden Schritte:
i) Bereitstellen einer Brandschutzschicht (2),
ii) Bereitstellen einer Funktionsschicht (3),
iii) Verbinden der Brandschutzschicht (2) mit der Funktionsschicht (3),
iv) Herstellen einer im Wesentlichen stoffschlüssigen Verbindung zwischen der Brandschutzschicht (2) und der Funktionsschicht (3).

Die zuvor getätigten Ausführungen in Bezug auf das erfindungsgemäße Brandschutzelement gelten gleichermaßen für das erfindungsgemäße Verfahren, soweit anwendbar.

Das Herstellen einer im Wesentlichen stoffschlüssigen Verbindung zwischen der Brandschutzschicht und der Funktionsschicht wird vorzugsweise durch Ausübung von Druck, beispielsweise durch Verpressen, herbeigeführt. Alternativ kann die im Wesentlichen stoffschlüssigen Verbindung zwischen der Brandschutzschicht und der Funktionsschicht auf durch die Verwendung einer Zwischenschicht, beispielsweise in Form einer Klebeschicht, hergestellt werden.

Zur Herstellung eines Brandschutzelementes, welches mehr als eine Brandschutzschicht und/oder mehr als eine Funktionsschicht aufweist, wie beispielsweise zwei Brandschutzschichten und eine Funktionsschicht, können die Schritte des erfindungsgemäßen Verfahrens mehrfach wiederholt werden.

Gegenstand der vorliegenden Erfindung ist ferner die Verwendung eines erfindungsgemäßen Brandschutzelements zur Abdichtung von Durchgangsöffnungen und/oder Fugen in Bauelementen gegen Feuer und Rauchgase
Die Erfindung wird anhand der nachfolgenden Beispiele näher erläutert:

### AUSFÜHRUNGSBEISPIELE

Es wurden die Formulierungen 1 und 2 mit den in Tabelle 1 spezifizierten Bestandteilen hergestellt, in dem die angegebenen Bestandteile miteinander vermischt wurden. Die hergestellten Formulierungen umfassen ein Trägermaterial sowie ein physikalisch wirkendes Treibmittel und können als Ausgangsmaterial zur Herstellung der Brandschutzschichten dienen. Die entsprechenden Bestandteile sind in der nachstehenden Tabelle spezifiziert.

**Tabelle 1: Bestandteile Ausgangsmaterial zur Herstellung der Brandschutzschichten**

| | **1** | **2** |
|---|---|---|
| | [Gew.-%] | [Gew.-%] |
| Wässrige Acrylat-Dispersion (65 % Acrylat und 35 % Wasser) | 29,00 | 42,0 |
| Blähgraphit (Kaisersberg) | 6,00 | 44,0 |
| Ammoniak (Ammoniumhydroxid, 25 % in Wasser) | 1,26 | 0,1 |
| Glasfaser Kurzschnitt (Durchmesser -10 µm, Länge 6mm) | 1,10 | 5,2 |
| Ammoniumpolyphosphat | 10,0 | 8,7 |
| Emulgator | 0,20 | - |
| Dispergiermittel | 0,50 | - |
| Weichmacher (Indopol) | 5,50 | - |
| Monopropylenglycol | 1,00 | - |
| Fungizid | 0,30 | - |
| Verdicker | 0,14 | - |
| Wasser | 8,40 | - |
| Kaolin (Capsil 2004) | 25,60 | - |
| Schaumglaskugeln (Poraver 40-125 µm) | 10,00 | - |
| Eisenoxid | 1,00 | - |

Zur Herstellung der Brandschutzschichten zum Einsatz im erfindungsgemäßen Brandschutzelement wurde eine definierte Menge der jeweiligen Formulierung auf eine PE-Folie mit einer glatten Oberfläche aufgebracht und anschließend das Ausgangsmaterial durch Umschlagen der PE-Folie beidseitig bedeckt. Das mit PE-Folie bedeckte Ausgangsmaterial wurde im ersten Schritt mit einem Kalander auf eine Schichtdicke von 6 mm (Abstand der Walzen im Kalander zwischen 0,5 mm und 10,0 mm) gebracht. Der Abstand der Walzen des Kalanders wurde in Schritten von etwa 1 mm verkleinert und die vorgenannten Schritte wiederholt bis die Masse die gewünschte Schichtdicke aufwies (bei den beschriebenen Ausführungsbeispielen 3,5 mm). Zur Glättung der Oberfläche wurde der letzte Bearbeitungsschritt mit dem Kalander zweifach durchgeführt. Alternativ wurde dieser Schritt durch Ausüben von Druck durch eine Rolle durchgeführt. Die so hergestellten Verbundwerkstoffe zeigen eine im Wesentlichen parallele Ausrichtung des schichtartig aufgebauten, physikalisch wirkenden Treibmittels innerhalb des Trägermaterials, welches mittels visueller Inspektion unter einem Mikroskop festgestellt wurde.

Die so hergestellten Brandschutzschichten wurden zur Herstellung von erfindungsgemäßen Brandschutzelementen verwendet. Dazu wurden zwischen zwei Brandschutzschichten jeweils eine Funktionsschicht angeordnet und die jeweilige Brandschutzschicht mit der dazu benachbarten Funktionsschicht im Wesentlichen stoffschlüssig durch Verpressen miteinander verbunden. Wenn durch das Anpressen keine im Wesentlichen stoffschlüssige Verbindungen erhalten werden konnte, wurde zwischen den Schichten zusätzlich eine geringe Menge der wässrigen Acrylatdispersion aufgebracht, um eine im Wesentlichen stoffschlüssige Verbindung zu erhalten.

Zur Bestimmung der Expansionseigenschaften der Brandschutzelemente wurde ein Gerät zur Funktionsersatzprüfung verwendet, mit der die Höhe der Expansion (Richtung der Expansion nach oben) ermittelt werden konnte. Zum Vergleich der unterschiedlichen Brandschutzelemente wurde aus diesen Messungen der sogenannte Expansionsfaktor bestimmt, der den Quotient aus Expansionshöhe des jeweiligen Brandschutzelements zum Gesamtgewicht aller Brandschutzschichten des Brandschutzelements dargestellt. Das Messgerät zur Durchführung der Funktionsersatzprüfung bestand aus zwei horizontal angeordneten beheizbaren Platten. Die obere Platte wies ein konstantes Gewicht auf. Zu messende Brandschutzelemente (kreisförmig, Durchmesser 45 mm) wurden zwischen den beheizbaren Platten angeordnet und einem Temperaturprogramm ausgesetzt (Starttemperatur 50 °C, Heizrate 20 °C/min, Zwischentemperatur 100 °C (5 min), Heizrate 20 °C, Endtemperatur 500 °C (15 min Haltezeit). Die obere Platte war in der Lage die Expansion der Brandschutzelemente in die Höhe aufzuzeichnen.

Figur 7 zeigt eine Fotographie einer Gegenüberstellung eines dreischichtigen expandierten Schichtkörpers aus dem Stand der Technik (links) und eines dreischichtigen expandierten Schichtkörpers (rechts) im Sinne der vorliegenden Erfindung, nach Messung der Expansionseigenschaften. Es zeigte sich, dass beim erfindungsgemäßen Brandschutzelement die Expansion vorwiegend in die Höhe (senkrecht zu den Teilchen des schichtartig aufgebauten, physikalisch wirkenden Treibmittels) stattfand, wohingegen beim Brandschutzelement aus dem Stand der Technik die Expansion in die Höhe wesentlich geringer ausgeprägt war und stattdessen in Längsrichtung stattfand.

Zur Herstellung von erfindungsgemäßen Brandschutzelementen wurden unterschiedliche semi-rigide Materialien als Funktionsschicht verwendet. Es wurden Brandschutzelemente mit einem dreischichtigen Aufbau aus zwei Brandschutzschichten und einer zwischen den Brandschutzschichten angeordneten Funktionsschicht hergestellt. Das semi-rigide Material der Funktionsschicht ist in Tabelle 2 und 3 spezifiziert.

Zum Vergleich unterschiedlicher Funktionsschichten wurde die relative Performance von Brandschutzelementen ermittelt, die definiert ist als der Quotient aus dem Expansionsfaktor eines Brandschutzelementes mit Zwischenschicht und dem Expansionsfaktor einer Referenzprobe ohne Zwischenschicht. Der Expansionsfaktor wird anhand einer Referenzgeraden erhalten, welche vorab durch Messung des Expansionsverhaltens mit verschieden dicken Proben erstellt wurde. Alle Brandschutzelemente mit einer relativen Performance von größer 1 zeigen eine verbesserte Performance und sind erfindungsgemäß. Die ermittelten Referenzgerade für die beiden Formulierungen 1 und 2 sind in den Beschriftungen der Tabellen 2 und 3 angegeben.

**Tabelle 2: Relative Performance verschiedener Funktionsschichten, Brandschutzschichten gemäß Formulierung 1. Der Expansionsfaktor y wurde anhand der Referenzgerade y = 8,23 * x-1,46 berechnet (x = Gewicht der Probe), welche anhand von Brandschutzschichten mit unterschiedlichen Dicken ermittelt wurde (Durchmesser 4,5 cm; ca. 5,0 bis 17,0 g; R² = 0,98)**

| **Funktionsschicht (alle Maße in mm)** | **Relative Performance** |
|---|---|
| Standard ohne Zwischenschicht | 1,00 |
| Stahlfaser-verstärktes Glasfasergewebe (Körper, Flächengewicht 660 g/m²; Dicke 0,8 mm; Fadenzahl Kette/Schuss 15,5/16; Höchstzugkraft Kette/Schuss > 2200/ > 3200 N/5cm gemäß ISO 4606) | 1,74 |
| Streckmetall (Aluminium 99,5 hh, Stegbreite 0,6, Stegdicke 0,5, Maschenweite 4,0, Maschenhöhe 2,4, Gesamtdicke 0,9) | 1,71 |
| Streckmetall (Aluminium 99,5 hh, Stegbreite 1,5, Stegdicke 0,8, Maschenweite 10,0, Maschenhöhe 5,0, Gesamtdicke 1,7) | 1,58 |

**Tabelle 3: Relative Performance verschiedener Funktionsschichten, Brandschutzschichten gemäß Formulierung 2. Der Expansionsfaktor y wurde anhand der Referenzgerade y = 16,66 * x^{-1,52} berechnet (x = Gewicht der Probe), welche anhand von Brandschutzschichten mit unterschiedlichen Dicken ermittelt wurde (Durchmesser 4,5 cm; ca. 7,0 bis 18,0 g; R² = 0,95)**

| **Funktionsschicht (alle Maße in mm)** | **Relative Performance** |
|---|---|
| Standard ohne Zwischenschicht | 1,00 |
| Stahlfaser-verstärktes Glasfasergewebe (Körper, Flächengewicht 660 g/m²; Dicke 0,8 mm; Fadenzahl Kette/Schuss 15,5/16; Höchstzugkraft Kette/Schuss > 2200/ > 3200 N/5cm gemäß ISO 4606) | 1,75 |
| Streckmetall (Aluminium 99,5 hh, Stegbreite 0,6, Stegdicke 0,5, Maschenweite 4,0, Maschenhöhe 2,4, Gesamtdicke 0,9) | 1,50 |
| Streckmetall (Aluminium 99,5 hh, Stegbreite 1,5, Stegdicke 0,8, Maschenweite 10,0, Maschenhöhe 5,0, Gesamtdicke 1,7) | 1,14 |

Es wurden Brandschutzelemente mit den in der nachstehenden Tabelle aufgeführten Spezifikationen hergestellt. Diese Brandschutzelemente wurde in einem 120 min F&T Rating Brandtest mit unterschiedlichen Rohrtypen getestet. Die Prozentangaben beziehen sich auf den Vergleich mit einer HILTI CP-644 Brandschutzmanschette.

**Tabelle 4: Übersicht Materialeinsparung bei erfindungsgemäßen Brandschutzelementen**

| Funktionsschicht | Anzahl Funktionsschichten | Masse Brandschutzelement gemäß Stand der Technik | E-Glasgewebe | Aluminium Streckmetall |
|---|---|---|---|---|
| Rohrtyp [mm] | | | Materialersparnis mit erfindungsgemäßen Brandschutzelementen | |
| 32 x 1,9 PVC | 1 | 32 g | -25 % | -34 % |
| 32 x 1,8 PVC | 1 | | -25 % | -34 % |
| 110 x 2,2 PVC | 2 | 330 g | -44 % | -55 % |
| 110 x 5,3 PVC | 2 | | -44 % | -55 % |
| 110 x 8,1 PVC | 2 | | | -58 % |
| 110 x 2,7 RehauRauPiano | 2 | | -46 % | -58 % |
| 110 x 5,3 Wavin AS | 2 | | - | -56 % |
| 160 x 3,2 PVC | 2x3 | 2 Brandschutzelemente gesamt: 1255 g | -53 % | -60 % |
| 160 x 4,3 RehauRauPiano | 2x3 | | - | -58 % |

Ein visueller Vergleich zur Materialeinsparung bei einem erfindungsgemäßen Brandschutzelement ist in Figur 6 dargestellt.

## Patentansprüche

1. Brandschutzelement (10) umfassend mindestens eine Brandschutzschicht (2) und mindestens eine Funktionsschicht (3), wobei
i) die Brandschutzschicht (2) ein Trägermaterial (4) und mindestens ein schichtartig aufgebautes, physikalisch wirkendes Treibmittel (5) umfasst und
ii) die Funktionsschicht (3) eine Temperaturbeständigkeit bis mindestens 300 °C aufweist,
**dadurch gekennzeichnet, dass** die Brandschutzschicht (2) und die Funktionsschicht (3) im Wesentlichen stoffschlüssig miteinander verbunden sind sowie, dass zueinander benachbarte Teilchen des schichtartig aufgebauten, physikalisch wirkenden Treibmittels im Wesentlichen parallel zueinander angeordnet sind und die Funktionsschicht (3) mindestens ein semi-rigides Material umfasst.

2. Brandschutzelement (10) nach Anspruch 1, **dadurch gekennzeichnet, dass** das schichtartig aufgebaute, physikalisch wirkende Treibmittel (5) aus der Gruppe bestehend aus Graphit-Interkallationsverbindungen, Schichtsilikat-Interkallationsverbindungen und Mischungen daraus ausgewählt ist.

3. Brandschutzelement (10) nach Anspruch 1 oder 2, **dadurch gekennzeichnet, dass** das schichtartig aufgebaute, physikalisch wirkenden Treibmittel (5) in das Trägermaterial (4) eingebettet ist.

4. Brandschutzelement (10) nach einem der Ansprüche 1 bis 3, **dadurch gekennzeichnet, dass** das schichtartig aufgebaute, physikalisch wirkende Treibmittel (5) auf einer oder mehreren Flächen der Oberflache des Trägermaterials (4) angebracht ist, insbesondere auf der der Funktionsschicht (3) zugewandten Fläche.

5. Brandschutzelement (10) nach einem der vorhergehenden Ansprüche, **dadurch gekennzeichnet, dass** das Trägermaterial (4) einen Erweichungs- oder Zersetzungspunkt im Bereich von 80 °C bis 500 °C aufweist.

6. Brandschutzelement (10) nach einem der vorhergehenden Ansprüche, **dadurch gekennzeichnet, dass** das semi-rigide Material ausgewählt ist aus der Gruppe bestehend aus Faserverbundmaterial, Metall, Metalllegierungen und Kombinationen daraus.

7. Brandschutzelement (10) nach einem der vorhergehenden Ansprüche, **dadurch gekennzeichnet, dass** das semi-rigide Material als Folie, als perforierte Platte, als Matte, als Gitter oder als Gewebe ausgebildet ist.

8. Brandschutzelement (10) nach Anspruch 7 oder 8, **dadurch gekennzeichnet, dass** das semi-rigide Material ausgewählt ist aus der Gruppe bestehend aus Streckmetall, Glasfasergewebe, Aluminiumfolie und Kombinationen daraus.

9. Brandschutzelement (10) nach einem der vorhergehenden Ansprüche, **dadurch gekennzeichnet, dass** das Brandschutzelement (10) einen Schichtkörper (11) mit mindestens zwei Brandschutzschichten (21, 22) und mindestens eine zwischen den Brandschutzschichten angeordnete Funktionsschicht (3) umfasst.

10. Brandschutzelement (10) nach Anspruch 9, **dadurch gekennzeichnet, dass** die Brandschutzschichten (21, 22) und die zwischen den Brandschutzschichten angeordnete Funktionsschicht (3) im Wesentlichen stoffschlüssig miteinander verbunden sind.

11. Brandschutzelement (10) nach einem der vorhergehenden Ansprüche, **dadurch gekennzeichnet, dass** eine oder mehrere der Brandschutzschichten (2) und/oder die Funktionsschicht (3) zusätzlich eine oder mehrere Zwischenschichten (6) umfassen.

12. Brandschutzelement (10) nach einem der vorhergehenden Ansprüche, **dadurch gekennzeichnet, dass** die Brandschutzschicht (2) eine maximale mittlere Schichtdicke von ≤ 10 mm aufweist.

13. Brandschutzelement (10) nach einem der vorhergehenden Ansprüche, **dadurch gekennzeichnet, dass** der Schichtkörper (11) streifenförmig ausgestaltet ist.

14. Verfahren zur Herstellung eines Brandschutzelements (10) nach einem der Ansprüche 1 bis 13 umfassend die Schritte:
i) Bereitstellen einer Brandschutzschicht (2),
ii) Bereitstellen einer Funktionsschicht (3),
iii) Verbinden der Brandschutzschicht (2) mit der Funktionsschicht (3),
iv) Herstellen einer im Wesentlichen stoffschlüssigen Verbindung zwischen der Brandschutzschicht (2) und der Funktionsschicht (3).

15. Verwendung eines Brandschutzelements (10) nach einem der Ansprüche 1 bis 13 oder hergestellt nach dem Verfahren gemäß Anspruch 14 zur Abdichtung von Durchgangsöffnungen und/oder Fugen in Bauelementen gegen Feuer und Rauchgase.
